(19) **Europäisches Patentamt**
**European Patent Office**
**Office européen des brevets**

(11) **EP 4 749 529 A1**

(12) **EUROPEAN PATENT APPLICATION**
published in accordance with Art. 153(4) EPC

(43) Date of publication:
**27.05.2026 Bulletin 2026/22**

(21) Application number: **24855676.3**

(22) Date of filing: **14.08.2024**

(51) International Patent Classification (IPC):
**G06N 3/08** (2023.01)   **G06F 8/36** (2018.01)

(52) Cooperative Patent Classification (CPC):
**G06F 8/71; G06F 18/22; G06N 3/08; G06N 20/00;**
**G06F 8/36; Y02D 10/00**

(86) International application number:
**PCT/CN2024/112022**

(87) International publication number:
**WO 2025/039950 (27.02.2025 Gazette 2025/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **24.08.2023 CN 202311075747**

(71) Applicant: **Huawei Technologies Co., Ltd.**
**Shenzhen, Guangdong 518129 (CN)**

(72) Inventors:
• **GUO, Lanzhe**
  **Nanjing, Jiangsu 210093 (CN)**
• **JIN, Yixuan**
  **Nanjing, Jiangsu 210093 (CN)**
• **ZHANG, Jiajin**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **MODEL MULTIPLEXING METHOD AND RELATED APPARATUS**

(57) Embodiments of this application provide a model reuse method and a related apparatus. The model reuse method includes: determining, from a learnware library, a first reuse model matching a target data set, where the learnware library includes a plurality of learnwares, each of the learnwares includes one reuse model and one model specification, the first reuse model is a reuse model included in one learnware in the learnware library, the target data set includes a plurality of pieces of target data, and the plurality of pieces of target data are tabular data; performing shrinkage adjustment on the first reuse model based on the target data set, to obtain a second reuse model; performing model expansion based on the target data set and the second reuse model, to obtain a third reuse model; and integrating the second reuse model and the third reuse model, to obtain a target reuse model corresponding to the target data set. In embodiments of this application, model reuse on unstructured table data may be efficiently implemented by using a small quantity of data, thereby reducing resource consumption.

| | |
|---|---|
| Determine, from a learnware library, a first reuse model matching a target data set | S301 |
| Perform shrinkage adjustment on the first reuse model based on the target data set, to obtain a second reuse model | S302 |
| Perform model expansion based on the target data set and the second reuse model, to obtain a third reuse model | S303 |
| Integrate the second reuse model and the third reuse model, to obtain a target reuse model corresponding to the target data set | S304 |

FIG. 3

## Description

This application claims priority to Chinese Patent Application No. 202311075747.9, filed with the China National Intellectual Property Administration on August 24, 2023, and entitled "MODEL REUSE METHOD AND RELATED APPARATUS", which is incorporated herein by reference in its entirety.

## TECHNICAL FIELD

This application relates to the field of artificial intelligence technologies, and in particular, to a model reuse method and a related apparatus.

## BACKGROUND

As technologies continuously develop, artificial intelligence technologies are also developing gradually. Currently, a machine learning technology has achieved a great success. However, to learn a high-quality model, a large quantity of marked high-quality data is usually required for training, and a training process of the model needs to consume a large quantity of resources and time. When a target task changes slightly, the model needs to be retrained, resulting in a large quantity of repetitive work and a waste of resources. Therefore, how to reuse a trained model in different target tasks without starting from scratch is under study, thereby saving a large quantity of time and reducing resource consumption and data usage.

However, an existing model reuse technology is mainly used for structured data, such as images and texts, and is difficult to be applied to unstructured table data. In addition, in the existing model reuse technology, initial training data of the model is usually further required during reuse. It is difficult to obtain the training data during reuse of the model. Consequently, model reuse difficulty is greatly increased.

Therefore, how to implement model reuse on unstructured table data simply and efficiently is a technical problem that needs to be urgently resolved.

## SUMMARY

Embodiments of this application provide a model reuse method and a related apparatus, to efficiently perform model reuse on unstructured table data by using a small quantity of data, thereby reducing resource consumption.

According to a first aspect, an embodiment of this application provides a model reuse method, including: determining, from a learnware library, a first reuse model matching a target data set, where the learnware library includes a plurality of reuse models, the first reuse model is one of the plurality of reuse models, the target data set includes a plurality of pieces of target data, and the plurality of pieces of target data are tabular data; performing shrinkage adjustment on the first reuse model based on the target data set, to obtain a second reuse model; performing model expansion based on the target data set and the second reuse model, to obtain a third reuse model; and integrating the second reuse model and the third reuse model, to obtain a target reuse model corresponding to the target data set.

A model reuse manner in an existing technology is inapplicable to unstructured table data, and model reuse difficulty is high. Therefore, an embodiment of this application provides a model reuse method, so that model reuse can be performed on the unstructured table data simply and efficiently. Specifically, first, the first reuse model matching the target data set is determined from the plurality of reuse models in the learnware library. The selected first reuse model is a reusable model that is in the learnware library and that is most suitable for processing a task corresponding to the target data set. The target data set includes the plurality of pieces of target data, and the plurality of pieces of target data are tabular data. Next, a user may directly use the first reuse model found from the learnware library, or continue to perform training or adjustment on the target data set, so that the user does not need to collect a large quantity of data to train a model from scratch, thereby greatly reducing computing power and a data volume used for training. When the first reuse model needs to be further adjusted, simple adjustment training is performed on the first reuse model based on the target data set, to obtain the target reuse model corresponding to the target data set. The target reuse model may perform inference or decision-making on the target data set to complete the task corresponding to the target data set. For example, statistics on the table data may be collected or the table data may be classified. In addition, in this embodiment of this application, in a process of adjusting the first reuse model, shrinkage adjustment is first performed on the first reuse model based on the target data set, to obtain the second reuse model. Next, model expansion, for example, incremental learning, is performed based on the target data set and the second reuse model, to obtain the third reuse model. Finally, the second reuse model obtained after shrinkage and the third reuse model obtained after expansion are integrated, to obtain the target reuse model. Compared with another adjustment manner, such a model adjustment manner of performing shrinkage and then expansion can provide a hot start when the user has only a small quantity of data, thereby reducing a quantity of target data required in the target data set. The target reuse model obtained after adjustment is performed in the manner is generally more applicable to the target data set, so that model reuse performance can be improved and accuracy of completing a task can also be increased.

In a possible implementation, the learnware library includes a plurality of learnwares, each of the learnwares includes one reuse model and a model specification corresponding to the reuse model, the model specification includes a model parameter vector and text information of the corresponding reuse model, and the text information indicates one or more of a model task, a model input, a model output, and a model running environment of the corresponding reuse model; and determining, from the learnware library, the first reuse model matching the target data set includes: determining, from the learnware library based on a target specification corresponding to the target data set, the first reuse model matching the target data set, where a model specification corresponding to the first reuse model is most similar to the target specification, where the target specification includes a model parameter vector and target text information that correspond to a trained preset training model, the target text information indicates target task information of the target data set, and the trained preset training model is a model obtained by training a preset linear model based on the target data set.

In an existing model reuse technology, it is usually assumed that reuse models are given. However, although there are a large quantity of models in an actual task, it is usually difficult to learn which models are helpful to a current task. If inference and trial-and-error are performed on the models one by one, a large quantity of resources are consumed. In view of this, in this embodiment of this application, when a user has a requirement, the first reuse model matching the target data set may be directly selected from the learnware library by using the model specification, thereby avoiding performing inference on all of the reuse models in the learnware library one by one, and greatly saving computing resources. For example, a model specification that best matches the target specification may be determined from model specifications in all the learnwares in the learnware library by using the target specification corresponding to the target data set, and then a reuse model correspond ing to the best matched model specification is determined as the first reuse model. In addition, the model specification includes the model parameter vector and the text information that correspond to the reuse model, so that a function feature of the reuse model can be better indicated, and the selected reuse model can better match a target task corresponding to the target data set, thereby improving reuse performance of the reuse model, increasing accuracy, and also reducing computing power and a data volume.

In a possible implementation, determining, from the learnware library based on the target specification corresponding to the target data set, the first reuse model matching the target data set includes: performing matching between the target specification and model specifications of all reuse models in the learnware library, to determine a cosine similarity between each of the model specifications and the target specification; and determining a reuse model corresponding to a model specification with a highest cosine similarity to the target specification as the first reuse model based on the cosine similarity between each of the model specifications and the target specification.

In this embodiment of this application, the cosine similarity between the target specification and each of the model specifications is calculated, and the reuse model corresponding to the model specification with the highest cosine similarity to the target specification is determined as the first reuse model. The model specification that is most similar to the target specification can be quickly and accurately found from a large quantity of model specifications by using the cosine similarity, so that the first reuse model that is most applicable to the target data set can be determined, thereby significantly increasing model reuse efficiency.

In a possible implementation, the method further includes: determining, based on the preset training model and a preset training data set corresponding to each of the reuse models, a model specification corresponding to each of the reuse models in the learnware library, where the preset training model includes a preset proxy model and the preset linear model.

In this embodiment of this application, each of the reuse models needs to use a model specification corresponding to a preset training model determiner, so that a user can quickly select, from the plurality of reuse models, the first reuse model required by the target data set. In addition, both the target specification and the model specification are determined by using a same preset linear model, so that matching accuracy can be greatly increased, to increase model reuse efficiency.

In a possible implementation, determining, based on the preset training model and the preset training data set corresponding to each of the reuse models, the model specification corresponding to each of the reuse models in the learnware library includes: performing, based on the preset proxy model, a prediction on the preset training data set corresponding to each of the reuse models, to obtain a training prediction result corresponding to each of the reuse models, where the training prediction result includes pseudo label information corresponding to the preset training data set; performing fitting training on the preset linear model based on the training prediction result corresponding to each of the reuse models, to obtain a trained preset linear model corresponding to each of the reuse models; and determining, based on a model parameter vector corresponding to the trained preset linear model, the model specification corresponding to the reuse model.

In this embodiment of this application, a model specification construction manner based on secondary learning model function approximation is used, so that the determined model specification of the reuse model can accurately indicate a function feature of the corresponding reuse model, and can better show a feature of the corresponding reuse model. In this case, a user can quickly and accurately select, from the large quantity of model specifications, the model specification most similar to the target specification, so that the first reuse model can be quickly found, thereby avoiding selecting the reuse model by performing matching one by one based on the target data set, and significantly increasing model reuse efficiency.

In a possible implementation, performing shrinkage adjustment on the first reuse model based on the target data set, to obtain the second reuse model includes: performing a plurality of predictions on the target data set based on the first reuse model, to obtain a first prediction result, where the first prediction result includes prediction values respectively corresponding to each prediction of the plurality of pieces of target data, the first reuse model includes $T$ subtrees, $N$ subtrees in the $T$ subtrees are used during each prediction, a quantity $N$ of subtrees used during each prediction is different, and both $T$ and $N$ are positive integers; and performing shrinkage adjustment on the first reuse model based on the first prediction result, to obtain the second reuse model.

In this embodiment of this application, after the reusable first reuse model is found based on the specification, a plurality of rounds of inference and predictions are performed on the target data set by using the first reuse model, so that shrinkage adjustment is performed on a structure of the first reuse model based on a plurality of rounds of prediction results, to obtain the second reuse model. The second reuse model may be more applicable to the target data set.

In a possible implementation, each piece of the target data corresponds to label information, and performing shrinkage adjustment on the first reuse model based on the first prediction result, to obtain the second reuse model includes: determining, based on the first prediction result and the label information corresponding to each piece of the target data, a loss vector corresponding to each prediction, where the loss vectors indicate loss values corresponding to the plurality of pieces of target data during respective predictions; determining, from the loss vectors respectively corresponding to the plurality of predictions, a quantity of subtrees included in the first reuse model corresponding to $K$ predictions with a smallest loss vector, where $K$ is a positive integer; performing shrinkage adjustment on the first reuse model a plurality of times based on the quantity of subtrees included in the first reuse model corresponding to the $K$ predictions with the smallest loss value, to obtain $K$ submodels; and determining the second reuse model based on the $K$ submodels.

In this embodiment of this application, based on the first prediction result, the loss vectors of the first reuse model in the target data set during a plurality of rounds of predictions are separately calculated, and the $K$ predictions with the smallest loss vector and the quantity of subtrees included in the first reuse model corresponding to the $K$ predictions are determined, to retain the $K$ submodels corresponding to the $K$ predictions with the smallest loss vector, to obtain a corresponding shrunk model, that is, the second reuse model that includes the $K$ submodels.

In a possible implementation, each piece of the target data corresponds to label information, and performing model expansion based on the target data set and the second reuse model, to obtain the third reuse model includes: performing a prediction on the target data set based on the second reuse model, to obtain a second prediction result, where the second prediction result includes a prediction value corresponding to each piece of the target data; determining, based on the second prediction result and the label information corresponding to each piece of the target data, residual information corresponding to the second reuse model; and performing model expansion based on the target data set and the residual information, to obtain the third reuse model.

In this embodiment of this application, based on the target data set, expansion adjustment may be further performed on the second reuse model obtained after shrinkage adjustment, and model expansion is performed by using a residual between predicted label information and real label information corresponding to the target data set, to obtain the third reuse model, so that the third reuse model obtained after adjustment is applicable to the target data set. In addition, model expansion is performed by using the residual information, so that the model obtained after learning is more accurate and has better reuse performance.

In a possible implementation, the preset training data set corresponding to the first reuse model and the target data set are not associated with each other.

In this embodiment of this application, the plurality of reuse models in the learnware library are all trained models, and model reuse may be implemented directly or after a small quantity of data is adjusted. Therefore, the preset training data set corresponding to the first reuse model and the target data set are not associated with each other, for example, are different data of similar tasks or come from different data sources.

According to a second aspect, an embodiment of this application provides a model reuse apparatus, including: a matching unit, configured to determine, from a learnware library, a first reuse model matching a target data set, where the learnware library includes a plurality of reuse models, the first reuse model is one of the plurality of reuse models, the target data set includes a plurality of pieces of target data, and the plurality of pieces of target data are tabular data; a shrinkage unit, configured to perform shrinkage adjustment on the first reuse model based on the target data set, to obtain a second reuse model; an expansion unit, configured to perform model expansion based on the target data set and the second reuse model, to obtain a third reuse model; and an integration unit, configured to integrate the second reuse model and the third reuse model, to obtain a target reuse model corresponding to the target data set.

In a possible implementation, the learnware library includes a plurality of learnwares, each of the learnwares includes one reuse model and a model specification corresponding to the reuse model, the model specification includes a model parameter vector and text information of the corresponding reuse model, and the text information indicates one or more of a model task, a model input, a model output, and a model running environment of the corresponding reuse model. The matching unit is specifically configured to determine, from the learnware library based on a target specification corresponding to the target data set, the first reuse model matching the target data set. A model specification corresponding to the first reuse model is most similar to the target specification. The target specification includes a model parameter vector and target text information that correspond to a trained preset training model, the target text information indicates target task information of the target data set, and the trained preset training model is a model obtained by training a preset linear model based on the target data set.

In a possible implementation, the matching unit is specifically configured to perform matching between the target specification and model specifications of all reuse models in the learnware library, to determine a cosine similarity between each of the model specifications and the target specification; and determine a reuse model corresponding to a model specification with a highest cosine similarity to the target specification as the first reuse model based on the cosine similarity between each of the model specifications and the target specification.

In a possible implementation, the apparatus further includes: a specification unit, configured to determine, based on the preset training model and a preset training data set corresponding to each of the reuse models, a model specification corresponding to each of the reuse models in the learnware library. The preset training model includes a preset proxy model and the preset linear model.

In a possible implementation, the specification unit is specifically configured to perform, based on the preset proxy model, a prediction on the preset training data set corresponding to each of the reuse models, to obtain a training prediction result corresponding to each of the reuse models, where the training prediction result includes pseudo label information corresponding to the preset training data set; perform fitting training on the preset linear model based on the training prediction result corresponding to each of the reuse models, to obtain a trained preset linear model corresponding to each of the reuse models; and determine, based on a model parameter vector corresponding to the trained preset linear model, the model specification corresponding to the reuse model.

In a possible implementation, the shrinkage unit is specifically configured to perform a plurality of predictions on the target data set based on the first reuse model, to obtain a first prediction result, where the first prediction result includes prediction values respectively corresponding to each prediction of the plurality of pieces of target data, the first reuse model includes T subtrees, N subtrees in the T subtrees are used during each prediction, a quantity N of subtrees used during each prediction is different, and both T and N are positive integers; and perform shrinkage adjustment on the first reuse model based on the first prediction result, to obtain the second reuse model.

In a possible implementation, each piece of the target data corresponds to label information, and the shrinkage unit is specifically configured to determine, based on the first prediction result and the label information corresponding to each piece of the target data, a loss vector corresponding to each prediction, where the loss vectors indicate loss values corresponding to the plurality of pieces of target data during respective predictions; determine, from the loss vectors respectively corresponding to the plurality of predictions, a quantity of subtrees included in the first reuse model corresponding to K predictions with a smallest loss vector, where K is a positive integer; perform shrinkage adjustment on the first reuse model a plurality of times based on the quantity of subtrees included in the first reuse model corresponding to the K predictions with the smallest loss value, to obtain K submodels; and determine the second reuse model based on the K submodels.

In a possible implementation, each piece of the target data corresponds to label information, and the expansion unit is specifically configured to perform a prediction on the target data set based on the second reuse model, to obtain a second prediction result, where the second prediction result includes a prediction value corresponding to each piece of the target data; determine, based on the second prediction result and the label information corresponding to each piece of the target data, residual information corresponding to the second reuse model; and perform model expansion based on the target data set and the residual information, to obtain the third reuse model.

According to a third aspect, an embodiment of this application provides a computer-readable storage medium, configured to store a computer software instruction used by the model reuse apparatus provided in the second aspect. The computer software instruction includes a program used to perform the model reuse method provided in the first aspect.

According to a fourth aspect, an embodiment of this application provides a computer program. The computer program includes instructions. When the computer program is executed by a computer, the computer is enabled to execute the procedure executed by the model reuse apparatus in the second aspect.

It should be understood that the model reuse apparatus provided in the second aspect of this application, the computer-readable storage medium provided in the third aspect, and the computer program provided in the fourth aspect are consistent with the technical solution in the first aspect of this application. For specific content and beneficial effects of the model reuse apparatus, the computer-readable storage medium, and the computer program, refer to the model reuse method provided in the first aspect. Details are not described herein again.

**BRIEF DESCRIPTION OF DRAWINGS**

To describe the technical solutions in embodiments of this application or in the background more clearly, the following briefly describes the accompanying drawings for describing the embodiments of this application or the background.

FIG. 1 is a diagram of an architecture of a model reuse system according to an embodiment of this application;

FIG. 2 is another architecture of a model reuse system according to an embodiment of this application;

FIG. 3 is a schematic flowchart of a model reuse method according to an embodiment of this application;

FIG. 4 is a diagram of a scenario of searching for a first reuse model according to an embodiment of this application;

FIG. 5 is a schematic flowchart of constructing a model specification according to an embodiment of this application;

FIG. 6 is a schematic flowchart of performing shrinkage adjustment on a reuse model according to an embodiment of this application;

FIG. 7 is a diagram of a reuse model adjustment scenario according to an embodiment of this application; and

FIG. 8 is a diagram of a structure of a model reuse apparatus according to an embodiment of this application.

**DESCRIPTION OF EMBODIMENTS**

The following describes embodiments of this application with reference to the accompanying drawings in embodiments of this application.

In the specification, claims, and accompanying drawings of this application, the terms "first", "second", "third", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of the items, including any combination of singular items (pieces) or plural items (pieces). For example, at least one of a, b, or c may indicate a, b, c, a and b, a and c, b and c, or a, b, and c, where a, b, and c may be singular or plural.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be explicitly or implicitly appreciated by those skilled in the art that the embodiments described herein may be combined with other embodiments.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

First, for ease of understanding embodiments of this application, the following specifically analyzes a technical problem that needs to be resolved in embodiments of this application and an applicable application scenario.

As technologies continuously develop, artificial intelligence technologies are also developing gradually. Currently, a machine learning technology has achieved a great success. However, to learn a high-quality model, a large quantity of marked high-quality data is usually required for training, and a training process of the model needs to consume a large quantity of resources and time.

When a target task changes slightly, the model needs to be retrained, resulting in a large quantity of repetitive work and a waste of resources. Therefore, how to reuse a trained model in different target tasks without starting from scratch is under study, thereby saving a large quantity of time and reducing resource consumption and data usage.

In an existing model reuse solution, an initial reusable model is usually determined based on distribution of input data of a target task. For structured data such as an image and a text, the determined reusable model (generally a deep neural network) is fine-tuned for a target task for adaptation. A representative fine-tuning method includes fine-tuning, knowledge distillation, and the like. For unstructured table data, there are some transfer learning technologies related to model reuse, for example, an iterative algorithm TradaBoost.

However, the existing model reuse method has the following disadvantages:

1. It is difficult to reuse an unstructured data model: An existing mature model reuse technology is mainly used for structured data, such as an image and a text, and is difficult to be applied to the unstructured table data. In terms of the unstructured table data, because the iterative algorithm TradaBoost requires use of new data to assist old data (that is, training data), in many model reuse scenarios, original training data of the reuse model cannot be obtained or is difficult to obtain. As a result, the method is not well applicable to the model reuse scenario of the unstructured data.

2. It is difficult to select a reusable model: In the existing model reuse technology, it is usually assumed that reusable models are given. However, in an actual task, there are usually a large quantity of models, and it is usually difficult to learn which models are helpful to a current task. If inference and trial-and-error are performed on the models one by one, a large quantity of resources are consumed.

3. It is difficult to obtain data: Many model reuse technologies cannot be directly applied to a target task, and further adjustment is required. In addition, a large quantity of data is required in the adjustment process. In some fields or tasks, data of the target task is usually scarce or difficult to obtain.

Therefore, embodiments of this application provide a model reuse method and a related apparatus, to efficiently perform model reuse on unstructured table data. The model reuse method may include: determining, from a learnware library, a first reuse model matching a target data set, where the learnware library includes a plurality of reuse models, the first reuse model is one of the plurality of reuse models, the target data set includes a plurality of pieces of target data, and the plurality of pieces of target data are tabular data sets;

performing shrinkage adjustment on the first reuse model based on the target data set, to obtain a second reuse model;
performing model expansion based on the target data set and the second reuse model, to obtain a third reuse model; and
integrating the second reuse model and the third reuse model, to obtain a target reuse model corresponding to the target data set. For a specific implementation, correspondingly refer to the following related embodiments. Details are not described herein in this embodiment of this application.

In addition, it should be further noted that the model reuse method of the unstructured data provided in this embodiment of this application may be applied to scenarios such as vector prediction and financial detection in different regions. This is not specifically limited in embodiments of this application.

Based on the technical problem mentioned above, for ease of understanding of embodiments of this application, the following first describes a dynamic model behavior-based explainable system architecture on which embodiments of this application are based.

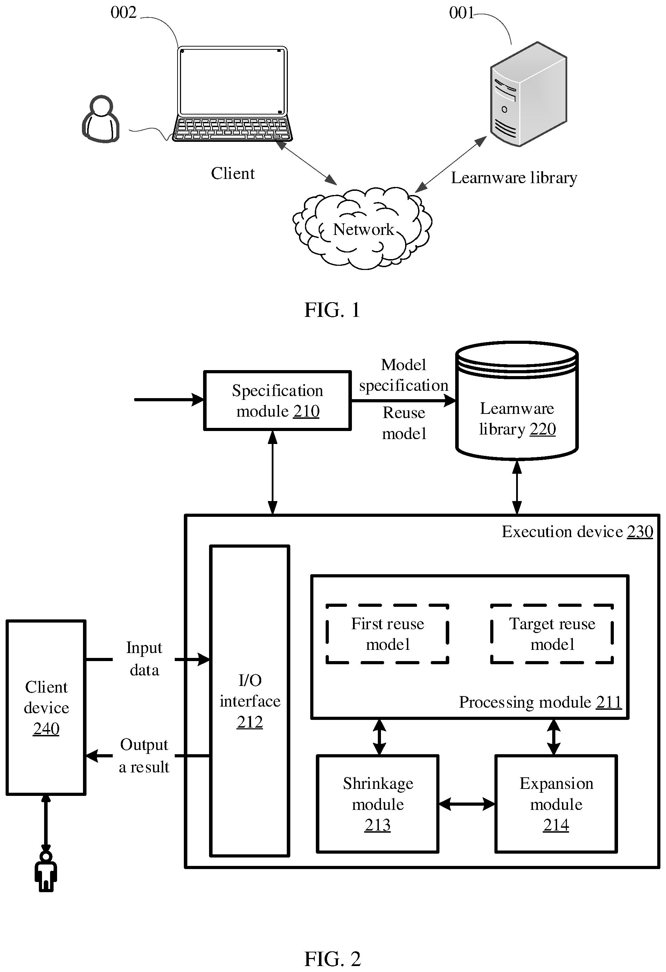

FIG. 1 is a diagram of an architecture of a model reuse system according to an embodiment of this application. The architecture of the model reuse system in this embodiment of this application may include a learnware library 001 and a client 002 in FIG. 1.

As shown in FIG. 1, the learnware library 001 may be configured to store a trained reuse model, and the reuse model may be reused by a user in various scenarios in which a corresponding model is required. For example, a first reuse model that best matches a target data set is found from the learnware library 001, and then a target task corresponding to the target data set is implemented by using the reuse model.

In some other embodiments, the learnware library 001 may be further configured to store a plurality of learnwares, and each of the learnwares includes one reuse model and a model specification corresponding to the reuse model, that is, each of the learnwares includes one reuse model and one model specification. The model specification indicates a function feature of the corresponding reuse model. The model specification includes a model parameter vector of the corresponding reuse model. The model specification may further include text information of the corresponding reuse model. The text information is used to describe one or more of a model task, a model input, a model output, a model running environment, and the like of the corresponding reuse model by using a natural language. For example, when a user uploads a trained reuse model to the learnware library, a model specification corresponding to each reuse model in the learnware library may be obtained based on a preset training model and a preset training data set corresponding to each reuse model, then the reuse model and the model specification corresponding to the reuse model are packaged together into a learnware, and the learnware is uploaded to the learnware library 001. For example, the learnware library 001 stores a plurality of learnwares, so that a user may search for, by using the model specification in the learnware, a reuse model that best matches a target task, and then reuse the reuse model in the target task to resolve the target task. For a manner of generating a model specification and a model reuse manner in a specific learnware, refer to related descriptions in the following embodiments. Details are not described herein in this embodiment of this application.

It should be noted that the learnware library 001 may be disposed in an electronic device that may obtain, process, analyze, and extract data and perform related machine learning, such as a server, a cloud computing node, a distributed server, or a computing device. The electronic device may communicate with one or more clients 002 through the Internet or a communication bus.

The client 002 may be configured to upload one or more reuse models, or may be further configured to upload one or more learnwares. For example, the client 002 may be an electronic device such as a communication terminal, a portable terminal, a mobile device, a user terminal, a mobile terminal, a wireless communication device, a user agent, a user apparatus, a service device, or user equipment (User Equipment, UE). In addition, in some embodiments, the client 002 and the learnware library 001 may be disposed in a same electronic device, or may be disposed in different electronic devices. This is not specifically limited in this embodiment of this application.

In some embodiments, when a user wants to infer a related target task by using a matched reuse model in the learnware library 001, the user may enter, by using the client 002, the target data set corresponding to the target task, and search, based on the target data set, the learnware library 001 for a corresponding reuse model matching the target data set. The target data set may be some or all data of the target task, and a data type of the target data set is unstructured table data. Then, the reuse model is adjusted to a target reuse model applicable to the target data set in a model adjustment manner of shrinking and expanding a reuse model. Finally, the target data set is inferred based on the target reuse model obtained after adjustment, to obtain a task result corresponding to the target task. For a specific model reuse manner, further refer to the following related embodiments. Details are not described herein in this embodiment of this application.

It should be noted that the client 002 may perform human-machine interaction with the user by using input devices such as a keyboard, a virtual keyboard, a touchpad, a touchscreen, and a voice control device, such as a projector, a smartphone, and a display. A specific function executed by the client 002 is not specifically limited in this application.

FIG. 2 is another architecture of a model reuse system according to an embodiment of this application. As shown in FIG. 2, the architecture of the model reuse system in this embodiment of this application may include a specification module 210, a learnware library 220, an execution device 230, and a client device 240 in FIG. 2.

The specification module 210 may be configured to obtain a model specification of a reuse model, and upload the model specification and the reuse model together to the learnware library 220. For example, when a user uploads a trained reuse model to the learnware library, a model specification corresponding to the uploaded reuse model is obtained based on a preset training model and an original preset training data set corresponding to the reuse model.

In some other embodiments, the specification module 210 may be further configured to obtain a target specification corresponding to a target task or a target data set. For example, when a user needs to reuse a reuse model in the learnware library, the target specification corresponding to the target task or the target data set is determined based on the preset training model and the target data set.

The learnware library 220 (equivalent to the learnware library shown in FIG. 1) may be configured to store the trained reuse model, and the reuse model may be reused by the user in various scenarios in which a corresponding model is required.

The execution device 230 may simply and efficiently implement model reuse on unstructured table data, and for example, adjust the reuse model to a target reuse model applicable to the target data set in a model adjustment manner of shrinking and expanding a reuse model. Finally, the target data set is inferred based on the target reuse model obtained after adjustment, to obtain a task result corresponding to the target task.

The execution device 230 includes a processing module 211, an I/O interface 212, a shrinkage module 213, and an expansion module 214.

The I/O interface 212 may be configured to transmit related data, for example, receive a target data set of a target task uploaded by a user by using the client device 240 (equivalent to the client shown in FIG. 1). The target data set includes a plurality of pieces of target data, and the plurality of pieces of target data are all unstructured or non-homogeneous tabular data. For example, the target data set is sales volume data of a plurality of products in a region.

After obtaining the target data set through the I/O interface 212, the processing module 211 may determine, from a plurality of reuse models in the learnware library 220, a first reuse model matching the target data set. The selected first reuse model is a reusable model that is in the learnware library and that is most suitable for processing a task corresponding to the target data set.

The shrinkage module 213 is configured to perform shrinkage adjustment on a reuse model. For example, shrinkage adjustment is performed on the first reuse model based on the target data set, to obtain a second reuse model.

The expansion module 214 is configured to perform expansion adjustment on the reuse model. For example, model expansion is performed based on the target data set and the second reuse model, to obtain a third reuse model.

The processing module 211 may be further configured to integrate the second reuse model obtained from the shrinkage module 213 and the second reuse model obtained from the expansion module 214, to obtain a final target reuse model. The target reuse model may perform inference on the target data set or all data of the target task corresponding to the target data set, to obtain a task result of the target task.

Finally, the I/O interface 212 returns the task result to the client device 240 and provides the task result to the user.

In addition, in the case shown in FIG. 2, the user may manually specify data to be entered into the execution device 230, for example, operate in an interface provided by the I/O interface 212. In another case, the client device 240 may automatically enter data into the I/O interface 212 and obtain a result. If the client device 240 needs to obtain permission of the user for automatically entering the data, the user may set corresponding permission in the client device 240. The user may view, on the client device 240, the result output by the execution device 230. Specifically, the result may be presented in a manner of display, a sound, an action, or the like. The client device 240 may also serve as a data collection end to save the obtained data of the target task into a database.

It should be noted that FIG. 1 and FIG. 2 are merely diagrams of several example system architectures according to the embodiments of this application, and a location relationship between the devices, the components, the modules, and the like shown in the figures does not constitute any limitation.

It should be further noted that specific implementations of the devices, the components, the modules, and the like shown in the foregoing figures may be referenced to the following related embodiments. Details are not described herein in this embodiment of this application.

It may be understood that the architectures of the model reuse system in FIG. 1 and FIG. 2 are merely some example implementations in the embodiments of this application, and an architecture of the model reuse system in the embodiments of this application includes but is not limited to the foregoing architectures of the model reuse system.

In addition, based on the architectures of the model reuse system provided in FIG. 1 and FIG. 2 and with reference to the model reuse method provided in this application, the technical problem mentioned in this application is specifically analyzed and resolved.

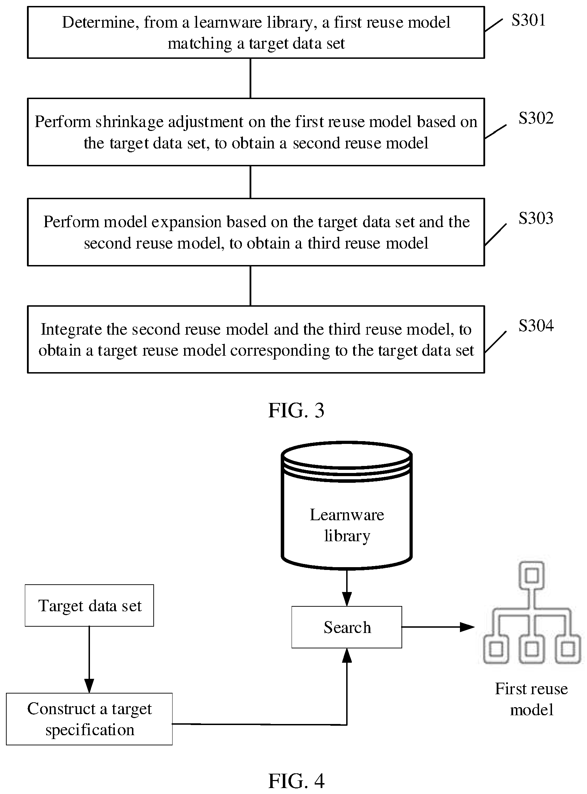

FIG. 3 is a schematic flowchart of a model reuse method according to an embodiment of this application.

The method may be applied to the architectures of the model reuse system in FIG. 1 and FIG. 2. The method may include the following step S301 to step S304.

Step S301: Determine, from a learnware library, a first reuse model matching a target data set.

Specifically, the learnware library includes a plurality of reuse models, each of the reuse models is a trained and transferable machine learning model, and the first reuse model is one of the plurality of reuse models in the learnware library. When obtaining a target data set of a target task, a user may select, from the plurality of reuse models based on the target data set, the first reuse model matching the target data set. The learnware library may include only the plurality of reuse models, or may further include directories, indexes, model specifications, or the like corresponding to the plurality of reuse models. This is not specifically limited in this embodiment of this application. In addition, the learnware library may also be referred to as a model library. This is also not specifically limited in this embodiment of this application.

It may be understood that the target data set of the target task includes a plurality of pieces of target data, the plurality of pieces of target data are tabular data, and the plurality of pieces of target data may be all task data of the target task, or may be some task data of the target task. This is not specifically limited in this embodiment of this application. For example, the target data set may be any table data set such as a sales volume prediction data set or a medical diagnosis data set. In the data set, each row represents one sample (that is, target data), and each column represents one feature. Generally, there is no spatial location relationship between a feature column and a feature column, that is, the feature columns are not correlated. A last column of each row may be to-be-predicted label information corresponding to the target data.

In some embodiments, the learnware library includes a plurality of learnwares, each of the learnwares includes one reuse model and a model specification corresponding to the reuse model, the model specification includes a model parameter vector and text information of the corresponding reuse model, and the text information indicates one or more of a model task, a model input, a model output, and a model running environment of the corresponding reuse model. Determining, from the learnware library, the first reuse model matching the target data set includes: determining, from the learnware library based on a target specification corresponding to the target data set, the first reuse model matching the target data set, where a model specification corresponding to the first reuse model is most similar to the target specification. The target specification includes a model parameter vector and target text information that correspond to a trained preset training model, the target text information indicates target task information of the target data set, and the trained preset training model is a model obtained by training a preset linear model based on the target data set.

FIG. 4 is a diagram of a scenario of searching for a first reuse model according to an embodiment of this application. It may be understood that each of the reuse models corresponds to one model specification, one reuse model and the model specification corresponding to the reuse model form one learnware, and the learnware library includes the foregoing plurality of learnwares. The model specification includes a model parameter vector and text information of the corresponding reuse model, and the text information indicates one or more of a model task, a model input, a model output, and a model running environment of the corresponding reuse model. For example, the text information may be a natural language description used to describe a function feature of the model. A function feature of the reuse model in the learnware may be learned in a simplest manner by using the model specification, so that when a user has a requirement, the first reuse model matching the target data set is directly selected from the learnware library based on the model specification in the learnware, thereby avoiding performing inference on all of the reuse models in the learnware library one by one, and greatly saving computing resources. For example, a large learnware library may be constructed. A large quantity of learnwares may be stored in the learnware library. Each of the learnwares includes a reuse model and a model specification corresponding to the reuse model. Each model is fully trained by a model developer by using data of the model developer. In addition, before uploading a model, the developer needs to construct one model specification through secondary training, packages the model specification and the model together into one learnware, and uploads the learnware to the learnware library for searching for the model.

As shown in FIG. 4, a model specification that best matches a target specification corresponding to the target data set is determined from model specifications corresponding to the plurality of reuse models in the learnware library, and then a reuse model corresponding to the best matched model specification is determined as the first reuse model. For example, when a user has a requirement, the user may construct a specification by using a small quantity of data of the user. Then the learnware library performs similarity calculation on the specification uploaded by the user and an existing model specification in the learnware library, to obtain a model with a highest specification matching degree, and returns the model to the user. The reuse model is searched for based on the model specification, so that the matched reuse model can be quickly and conveniently selected, thereby increasing screening efficiency, and also saving computing power and a data volume.

In some other embodiments, the learnware library may further directly store a plurality of reuse models and a model specification corresponding to each of the reuse models, that is, the reuse model and the model specification corresponding to the reuse model do not need to be packaged into one learnware for storage in the learnware library.

In some embodiments, determining, from the learnware library based on the target specification corresponding to the target data set, the first reuse model matching the target data set includes: performing matching between the target specification and model specifications of all reuse models in the learnware library, and to determine a cosine similarity between each of the model specifications and the target specification; and determining a reuse model corresponding to a model specification with a highest cosine similarity to the target specification as the first reuse model based on the cosine similarity between each of the model specifications and the target specification.

It should be noted that, matching is performed on the target specification and model specifications corresponding to reuse models in all the learnwares in the learnware library one by one, a specification similarity is calculated, and a learnware with a highest specification similarity is returned, to determine that the reuse model in the learnware is a reuse model that best matches the target task. For example, in this embodiment of this application, a similarity between specifications may be represented by using the cosine similarity, that is, the cosine similarity between the target specification and each of the model specifications is calculated, and the reuse model corresponding to the model specification with the highest cosine similarity to the target specification is determined as the first reuse model. The model specification that is most similar to the target specification can be quickly and accurately found from a large quantity of model specifications by using the cosine similarity, so that the first reuse model that is most applicable to the target data set can be determined, thereby significantly increasing model reuse efficiency.

In some embodiments the method further includes: determining, based on the preset training model and a preset training data set corresponding to each of the reuse models, a model specification corresponding to each of the reuse models in the learnware library, where the preset training model includes a preset proxy model and the preset linear model.

It should be noted that the preset training data set corresponding to each of the reuse models may be understood as an initial training data set for training the reuse model, and may be provided by a provider of the reuse model. Each of the reuse models needs to use a model specification corresponding to a preset training model determiner, so that a user can quickly select, from the plurality of reuse models, the first reuse model required by the target data set. In addition, both the target specification and the model specification are determined by using a same preset linear model, so that matching accuracy can be greatly increased, to increase model reuse efficiency. In addition, in this embodiment of this application, a model specification is constructed in a model specification construction manner based on secondary learning model function approximation. That is, the preset training model includes the preset proxy model and the preset linear model, and a model function may be learned twice, thereby greatly increasing accuracy of the model specification and further improving model reuse performance.

In some embodiments, determining, based on the preset training model and the preset training data set corresponding to each of the reuse models, the model specification corresponding to each of the reuse models in the learnware library includes: performing, based on the preset proxy model, a prediction on the preset training data set corresponding to each of the reuse models, to obtain a training prediction result corresponding to each of the reuse models, where the training prediction result includes pseudo label information corresponding to the preset training data set; performing fitting training on the preset linear model based on the training prediction result corresponding to each of the reuse models, to obtain a trained preset linear model corresponding to each of the reuse models; and determining, based on a model parameter vector corresponding to the trained preset linear model, the model specification corresponding to the reuse model.

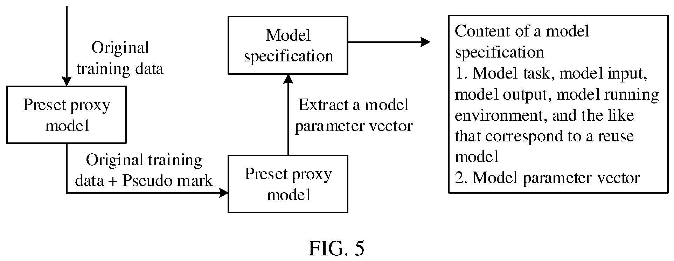

FIG. 5 is a schematic flowchart of constructing a model specification according to an embodiment of this application. As shown in FIG. 5, by using the preset proxy model, inference is performed on original training data corresponding to a reuse model, to obtain a prediction result as a pseudo mark. The preset linear model is trained to fit the pseudo mark, to obtain a preset linear model obtained through secondary training on the preset proxy model. A model parameter vector corresponding to the trained preset linear model may be determined as a part of the model specification corresponding to the reuse model. A model specification construction manner based on secondary learning model function approximation is used, so that the determined model specification of the reuse model can accurately indicate a function feature of the corresponding reuse model, and can better show a feature of the corresponding reuse model. In this case, a user can quickly and accurately select, from the large quantity of model specifications, the model specification most similar to the target specification, so that the first reuse model can be quickly found, thereby avoiding selecting the reuse model by performing matching one by one based on the target data set, and significantly increasing model reuse efficiency.

In some other embodiments, after the first reuse model matching the target data set is determined from the learnware library, the first reuse model is assigned or marked as a to-be-reused model, and the first reuse model assigned or marked as the to-be-reused model is evaluated, to obtain an evaluation result. The evaluation result indicates performance of the to-be-reused model in the target task. When the to-be-reused model reaches a performance threshold, the to-be-reused model may be directly reused in the target task. When the to-be-reused model does not reach a performance threshold, the to-be-reused model may be adjusted to meet a requirement of the target task, and a model obtained after adjustment is reused in the target task. For a specific adjustment manner, correspondingly refer to the following embodiments. Details are not described herein in this embodiment of this application.

In some other embodiments, the preset training data set corresponding to the first reuse model and the target data set are not associated with each other. It may be understood that, the plurality of reuse models in the learnware library are all trained models, that is, existing pre-trained models, and model reuse may be implemented directly or after a small quantity of data is adjusted. Therefore, the preset training data set corresponding to the first reuse model and the target data set are not associated with each other, for example, are different data of similar tasks or come from different data sources.

Step S302: Perform shrinkage adjustment on the first reuse model based on the target data set, to obtain a second reuse model.

Specifically, shrinkage adjustment is performed on the first reuse model based on the target data set, to obtain the second reuse model. It may be understood that, in this embodiment of this application, shrinkage adjustment is performed on the first reuse model to enable the adjusted model more applicable to the target data set of the target task. For example, after the reusable model is found based on the specification, a loss value of the model on data of the target task is calculated, and k submodels with a smallest loss value are retained, to obtain a shrunk model.

In some embodiments, performing shrinkage adjustment on the first reuse model based on the target data set, to obtain the second reuse model includes: performing a plurality of predictions on the target data set based on the first reuse model, to obtain a first prediction result, where the first prediction result includes prediction values respectively corresponding to each prediction of the plurality of pieces of target data, the first reuse model includes T subtrees, N subtrees in the T subtrees are used during each prediction, a quantity N of subtrees used during each prediction is different, and both T and N are positive integers; and performing shrinkage adjustment on the first reuse model based on the first prediction result, to obtain the second reuse model.

It should be noted that the first reuse model may be evaluated by using the target data set, and a structure of the existing model is adjusted based on an evaluation result, to enable the existing model to be applicable to the target data. It should be further noted that a quantity of subtrees corresponding to each reuse model may be set by a model provider, or may be set based on performance of the model. This is not specifically limited in this embodiment of this application. It should be noted that a rule for the plurality of predictions is not specifically limited in this embodiment of this application. For example, when a plurality of predictions are performed on the target data in the target data set by using the first reuse model, the prediction is performed based on a rule that N = 1 during a first prediction and that one subtree is added during each prediction compared with a previous prediction. For example, a prediction matrix Q may be further established. Each row and each column in Q represent a prediction value obtained by inferring the target data by using the N subtrees in the first reuse model. Then, for each column in the matrix Q, a loss vector of the column may be calculated based on a loss function and a real mark (that is, label information) corresponding to the target data. Assuming that an original model has T subtrees, a loss vector $L \in R^T$ may be obtained.

In some embodiments, each piece of the target data corresponds to label information, and performing shrinkage adjustment on the first reuse model based on the first prediction result, to obtain the second reuse model includes: determining, based on the first prediction result and the label information corresponding to each piece of the target data, a loss vector corresponding to each prediction, where the loss vectors indicate loss values corresponding to the plurality of pieces of target data during respective predictions; determining, from the loss vectors respectively corresponding to the plurality of predictions, a quantity of subtrees included in the first reuse model corresponding to K predictions with a smallest loss vector, where K is a positive integer; performing shrinkage adjustment on the first reuse model a plurality of times based on the quantity of subtrees included in the first reuse model corresponding to the K predictions with the smallest loss value, to obtain K submodels; and determining the second reuse model based on the K submodels.

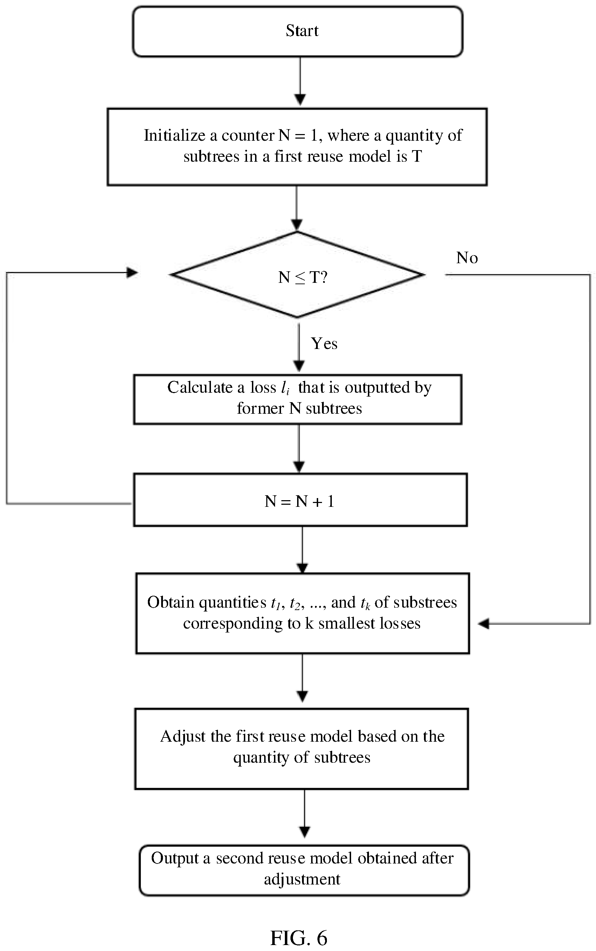

FIG. 6 is a schematic flowchart of performing shrinkage adjustment on a reuse model according to an embodiment of this application. As shown in FIG. 6, a quantity of subtrees during each prediction is counted by using a counter. Therefore, based on the foregoing rule of the plurality of predictions, during an $i^{th}$ prediction, it may be determined whether N is less than or equal to T, and a prediction value of each subtree is obtained. After a reusable first reuse model is found based on the specification, a plurality of rounds of inference and predictions are performed on the target data set by using the first reuse model, so that shrinkage adjustment is performed on a structure of the first reuse model based on a plurality of rounds of prediction results, to obtain the second reuse model. The second reuse model may be more applicable to the target data set, where i is greater than or equal to K.

A loss vector corresponding to each prediction is determined based on the first prediction result and the label information corresponding to each piece of the target data, and the loss vectors indicate loss values corresponding to the plurality of pieces of target data during respective predictions. A quantity of subtrees included in the first reuse model corresponding to K predictions with a smallest loss vector is determined from loss vectors respectively corresponding to the plurality of predictions. Shrinkage adjustment is performed on the first reuse model a plurality of times based on the quantity of subtrees included in the first reuse model corresponding to the K predictions with the smallest loss value, to obtain K submodels. The second reuse model is determined based on the K submodels. For example, k results with a smallest loss are obtained through sorting based on loss vectors L, and $l_1, l_2, \ldots, l_k$ is obtained. In addition, a quantity N = $t_1, t_2, \ldots, t_k$ of subtrees corresponding to the loss vectors is obtained. Based on the quantity of subtrees, N = $t_1, t_2, \ldots, t_k$ subtrees are separately retained for an original model, to obtain adjusted corresponding K submodels $M_{P_1}, M_{P_2}, \ldots, M_{P_k}$. In addition, weights

$$w_j = \frac{e^{\frac{1}{l_j}}}{\sum_{j=1}^{k} e^{\frac{1}{l_j}}}$$

of the K submodels may be further calculated based on the K loss values. Details are not described in this embodiment of this application. The second reuse model obtained after adjustment may be obtained based on the K models and the K weights. The second reuse model is $M_F = \sum_{j=1}^{k} w_j M_{P_j}$ .

In this embodiment of this application, based on the first prediction result, the loss vectors of the first reuse model in the target data set during a plurality of rounds of predictions are separately calculated, and the K predictions with the smallest loss vector and the quantity of subtrees included in the first reuse model corresponding to the K predictions are determined, to retain the K submodels corresponding to the K predictions with the smallest loss vector, to obtain a corresponding shrunk model, that is, the second reuse model that includes the K submodels.

Step S303: Perform model expansion based on the target data set and the second reuse model, to obtain a third reuse model.

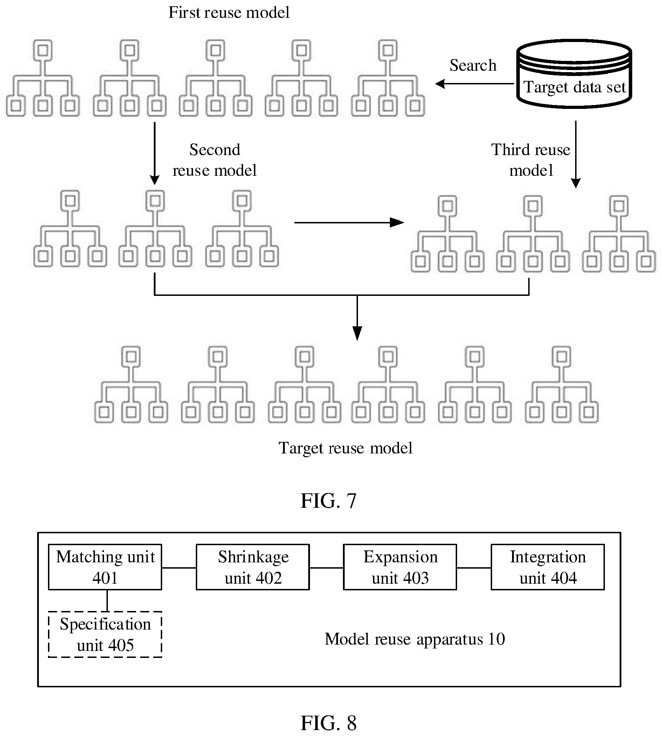

Specifically, model expansion is performed based on the target data set and the second reuse model, to obtain the third reuse model. FIG. 7 is a diagram of a reuse model adjustment scenario according to an embodiment of this application. When a user has a reusable first reuse model and a small quantity of target data, the user may tailor (that is, perform shrinkage adjustment) the first reuse model by using the target data, and then continue to train a tailored model by using the target data, to expand the model, to obtain a third reuse model, and finally obtain a target model obtained after the first reuse model is reused on a user task. Compared with another adjustment manner, such a model adjustment manner of performing shrinkage and then expansion can provide a hot start when the user has only a small quantity of data, thereby reducing a quantity of target data required in the target data set. The target reuse model obtained after adjustment is performed in the manner is generally more applicable to the target data set, so that model reuse performance can be improved and accuracy of completing a task can also be increased.

In some embodiments, each piece of the target data corresponds to label information, and performing model expansion based on the target data set and the second reuse model, to obtain the third reuse model includes: performing a prediction on the target data set based on the second reuse model, to obtain a second prediction result, where the second prediction result includes a prediction value corresponding to each piece of the target data; determining, based on the second prediction result and the label information corresponding to each piece of the target data, residual information corresponding to the second reuse model; and performing model expansion based on the target data set and the residual information, to obtain the third reuse model.

For example, a prediction is performed on the target data set based on the second reuse model $M_F$ obtained after adjustment is completed, to obtain a second prediction result. The second prediction result includes a prediction value corresponding to each piece of the target data. Residual information corresponding to the second reuse model is determined based on the second prediction result and the label information corresponding to each piece of the target data. For example, the prediction value is subtracted from a real label value of the target data, to obtain a residual mark $y_R$. Machine learning (for example, incremental learning) is performed based on the target data set and the residual information (that is, the residual mark $y_R$), and n new submodels are trained, for example, $M_{S_1}, M_{S_2}, \ldots, M_{S_n}$, to obtain a third reuse model. The third reuse model includes n trained submodels, for example, $M_G = \sum_{i=1}^{n} \frac{1}{n} M_{S_i}$. That is, based on the target data set, expansion adjustment is further performed on the second reuse model obtained after shrinkage adjustment, and incremental learning (that is, model expansion) is performed by using a residual between predicted label information and real label information corresponding to the target data set, to obtain the third reuse model, so that the third reuse model obtained after adjustment is applicable to the target data set. In addition, model expansion is performed by using the residual information, so that the model obtained after learning is more accurate and has better reuse performance. A prediction is performed on the data of the target task based on a shrunk model, a residual is fitted by using a residual between a prediction result and a real result, to obtain an expanded model, and the expanded model and the shrunk model are integrated to obtain a final model.

In some other embodiments, the third reuse model may be understood as a new model that is retrained based on the second prediction result of the second reuse model and the target data set, and is not directly obtained by adjusting the second reuse model.

Step S304: Integrate the second reuse model and the third reuse model, to obtain a target reuse model corresponding to the target data set.

Specifically, the second reuse model and the third reuse model are integrated, to obtain the target reuse model corresponding to the target data set, for example, a target reuse model

$$M = \sum_{j=1}^{k} w_j M_{P_j} + \sum_{i=1}^{n} \frac{1}{n} M_{S_i}.$$ In such a manner of directly integrating the second reuse model and the second reuse model, a calculation amount can be reduced and reuse efficiency can be increased without affecting model reuse performance. In addition, a trained model in a related task is used for a new task or field, to avoid collecting data from scratch to train a model, thereby reducing dependency on high-quality training data, and reducing a model training time and computing resource overheads.

In some embodiments, after the target reuse model corresponding to the target data set is obtained, all or some data of the target task corresponding to the target data set may be inferred, to complete the target task.

A model reuse manner in an existing technology is inapplicable to unstructured table data, and model reuse difficulty is high. Therefore, an embodiment of this application provides a model reuse method, so that model reuse can be performed on the unstructured table data simply and efficiently. Specifically, first, the first reuse model matching the target data set is determined from the plurality of reuse models in the learnware library. The selected first reuse model is a reusable model that is in the learnware library and that is most suitable for processing a task corresponding to the target data set. The target data set includes the plurality of pieces of target data, and the plurality of pieces of target data are tabular data. Next, a user may directly use the first reuse model found from the learnware library, or continue to perform training or adjustment on the target data set, so that the user does not need to collect a large quantity of data to train a model from scratch, thereby greatly reducing computing power and a data volume used for training. When the first reuse model needs to be further adjusted, simple adjustment training is performed on the first reuse model based on the target data set, to obtain the target reuse model corresponding to the target data set. The target reuse model may perform inference or decision-making on the target data set to complete the task corresponding to the target data set. For example, statistics on the table data may be collected or the table data may be classified. In addition, in this embodiment of this application, in a process of adjusting the first reuse model, shrinkage adjustment is first performed on the first reuse model based on the target data set, to obtain the second reuse model. Next, model expansion, for example, incremental learning, is performed based on the target data set and the second reuse model, to obtain the third reuse model. Finally, the second reuse model obtained after shrinkage and the third reuse model obtained after expansion are integrated, to obtain the target reuse model.

The foregoing describes the method in embodiments of this application in detail. The following provides a related apparatus in embodiments of this application.

FIG. 8 is a diagram of a structure of a model reuse apparatus according to an embodiment of this application. The model reuse apparatus 10 may include a matching unit 401, a shrinkage unit 402, an expansion unit 403, and an integration unit 404, and may further include a specification unit 405. Specifically, the matching unit 401 is configured to determine, from a learnware library, a first reuse model matching a target data set, where the learnware library includes a plurality of reuse models, the first reuse model is one of the plurality of reuse models, the target data set includes a plurality of pieces of target data, and the plurality of pieces of target data are tabular data.

The shrinkage unit 402 is configured to perform shrinkage adjustment on the first reuse model based on the target data set, to obtain a second reuse model.

The expansion unit 403 is configured to perform model expansion based on the target data set and the second reuse model, to obtain a third reuse model.

The integration unit 404 is configured to integrate the second reuse model and the third reuse model, to obtain a target reuse model corresponding to the target data set.

In some embodiments, the learnware library includes a plurality of learnwares, each of the learnwares includes one reuse model and a model specification corresponding to the reuse model, the model specification includes a model parameter vector and text information of the corresponding reuse model, and the text information indicates one or more of a model task, a model input, a model output, and a model running environment of the corresponding reuse model. The matching unit 401 is specifically configured to determine, from the learnware library based on a target specification corresponding to the target data set, the first reuse model matching the target data set. A model specification corresponding to the first reuse model is most similar to the target specification. The target specification includes a model parameter vector and target text information that correspond to a trained preset training model, the target text information indicates target task information of the target data set, and the trained preset training model is a model obtained by training a preset linear model based on the target data set.

In some embodiments, the matching unit 401 is specifically configured to perform matching between the target specification and model specifications of all reuse models in the learnware library, to determine a cosine similarity between each of the model specifications and the target specification; and determine a reuse model corresponding to a model specification with a highest cosine similarity to the target specification as the first reuse model based on the cosine similarity between each of the model specifications and the target specification.

In some embodiments, the apparatus further includes: the specification unit 405, configured to determine, based on the preset training model and a preset training data set corresponding to each of the reuse models, a model specification corresponding to each of the reuse models in the learnware library. The preset training model includes a preset proxy model and the preset linear model.

In some embodiments, the specification unit 405 is specifically configured to perform, based on the preset proxy model, a prediction on the preset training data set corresponding to each of the reuse models, to obtain a training prediction result corresponding to each of the reuse models, where the training prediction result includes pseudo label information corresponding to the preset training data set; perform fitting training on the preset linear model based on the training prediction result corresponding to each of the reuse models, to obtain a trained preset linear model corresponding to each of the reuse models; and determine, based on a model parameter vector corresponding to the trained preset linear model, the model specification corresponding to the reuse model.

In some embodiments, the shrinkage unit 402 is specifically configured to perform a plurality of predictions on the target data set based on the first reuse model, to obtain a first prediction result, where the first prediction result includes prediction values respectively corresponding to each prediction of the plurality of pieces of target data, the first reuse model includes T subtrees, N subtrees in the T subtrees are used during each prediction, a quantity N of subtrees used during each prediction is different, and both T and N are positive integers; and perform shrinkage adjustment on the first reuse model based on the first prediction result, to obtain the second reuse model.

In some embodiments, each piece of the target data corresponds to label information, and the shrinkage unit 402 is specifically configured to determine, based on the first prediction result and the label information corresponding to each piece of the target data, a loss vector corresponding to each prediction, where the loss vector indicates loss values corresponding to the plurality of pieces of target data during a corresponding prediction; determine, from the loss vectors respectively corresponding to the plurality of predictions, a quantity of subtrees included in the first reuse model corresponding to K predictions with a smallest loss vector, where K is a positive integer; perform shrinkage adjustment on the first reuse model a plurality of times based on the quantity of subtrees included in the first reuse model corresponding to the K predictions with the smallest loss value, to obtain K submodels; and determine the second reuse model based on the K submodels.

In some embodiments, each piece of the target data corresponds to label information, and the expansion unit 403 is specifically configured to perform a prediction on the target data set based on the second reuse model, to obtain a second prediction result, where the second prediction result includes a prediction value corresponding to each piece of the target data; determine, based on the second prediction result and the label information corresponding to each piece of the target data, residual information corresponding to the second reuse model; and perform model expansion based on the target data set and the residual information, to obtain the third reuse model.

It should be noted that, functions of the functional units in the model reuse apparatus 10 described in this embodiment of this application may be referenced to the related descriptions of step S301 to step S304 in the method embodiment in FIG. 3. Details are not described herein again.

In addition, an embodiment of this application further provides a computer-readable storage medium. The computer-readable storage medium stores computer program code. When a processor executes the computer program code, a computer is enabled to perform the method in any one of the foregoing embodiments.

An embodiment of this application further provides a computer program product. When the computer program product runs on a computer, the computer is enabled to perform the method in any of the foregoing embodiments.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may be specifically a processor in the computer device) to perform all or some of the steps of the methods described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A model reuse method, comprising:

   determining, from a learnware library, a first reuse model matching a target data set, wherein the learnware library comprises a plurality of reuse models, the first reuse model is one of the plurality of reuse models, the target data set comprises a plurality of pieces of target data, and the plurality of pieces of target data are tabular data;
   performing shrinkage adjustment on the first reuse model based on the target data set, to obtain a second reuse model;
   performing model expansion based on the target data set and the second reuse model, to obtain a third reuse model; and
integrating the second reuse model and the third reuse model, to obtain a target reuse model corresponding to the target data set.

2. The method according to claim 1, wherein the learnware library comprises a plurality of learnwares, each of the learnwares comprises one reuse model and a model specification corresponding to the reuse model, the model specification comprises a model parameter vector and text information of the corresponding reuse model, and the text information indicates one or more of a model task, a model input, a model output, and a model running environment of the corresponding reuse model; and
determining, from the learnware library, the first reuse model matching the target data set comprises:

determining, from the learnware library based on a target specification corresponding to the target data set, the first reuse model matching the target data set, wherein a model specification corresponding to the first reuse model is most similar to the target specification, wherein the target specification comprises a model parameter vector and target text information that correspond to a trained preset training model, the target text information indicates target task information of the target data set, and the trained preset training model is a model obtained by training a preset linear model based on the target data set.

3. The method according to claim 2, wherein determining, from the learnware library based on the target specification corresponding to the target data set, the first reuse model matching the target data set comprises:

performing matching between the target specification and model specifications of all reuse models in the learnware library, to determine a cosine similarity between each of the model specifications and the target specification; and
determining a reuse model corresponding to a model specification with a highest cosine similarity to the target specification as the first reuse model based on the cosine similarity between each of the model specifications and the target specification.

4. The method according to claim 2 or 3, wherein the method further comprises:
determining, based on the preset training model and a preset training data set corresponding to each of the reuse models, a model specification corresponding to each of the reuse models in the learnware library, wherein the preset training model comprises a preset proxy model and the preset linear model.

5. The method according to claim 4, wherein determining, based on the preset training model and the preset training data set corresponding to each of the reuse models, the model specification corresponding to each of the reuse models in the learnware library comprises:

performing, based on the preset proxy model, a prediction on the preset training data set corresponding to each of the reuse models, to obtain a training prediction result corresponding to each of the reuse models, wherein the training prediction result comprises pseudo label information corresponding to the preset training data set;
performing fitting training on the preset linear model based on the training prediction result corresponding to each of the reuse models, to obtain a trained preset linear model corresponding to each of the reuse models; and
determining, based on a model parameter vector corresponding to the trained preset linear model, the model specification corresponding to the reuse model.

6. The method according to any one of claims 1 to 5, wherein performing shrinkage adjustment on the first reuse model based on the target data set, to obtain the second reuse model comprises:

performing a plurality of predictions on the target data set based on the first reuse model, to obtain a first prediction result, wherein the first prediction result comprises prediction values respectively corresponding to each prediction of the plurality of pieces of target data, the first reuse model comprises T subtrees, N subtrees in the T subtrees are used during each prediction, a quantity N of subtrees used during each prediction is different, and both T and N are positive integers; and
performing shrinkage adjustment on the first reuse model based on the first prediction result, to obtain the second reuse model.

7. The method according to claim 6, wherein each piece of the target data corresponds to label information, and performing shrinkage adjustment on the first reuse model based on the first prediction result, to obtain the second reuse model comprises:

determining, based on the first prediction result and the label information corresponding to each piece of the target data, a loss vector corresponding to each prediction, wherein the loss vectors indicate loss values corresponding to the plurality of pieces of target data during respective predictions;

determining, from the loss vectors respectively corresponding to the plurality of predictions, a quantity of subtrees comprised in the first reuse model corresponding to K predictions with a smallest loss vector, wherein K is a positive integer;

performing shrinkage adjustment on the first reuse model a plurality of times based on the quantity of subtrees comprised in the first reuse model corresponding to the K predictions with the smallest loss value, to obtain K submodels; and

determining the second reuse model based on the K submodels.

8. The method according to any one of claims 1 to 7, wherein each piece of the target data corresponds to label information, and performing model expansion based on the target data set and the second reuse model, to obtain the third reuse model comprises:

performing a prediction on the target data set based on the second reuse model, to obtain a second prediction result, wherein the second prediction result comprises a prediction value corresponding to each piece of the target data;

determining, based on the second prediction result and the label information corresponding to each piece of the target data, residual information corresponding to the second reuse model; and

performing model expansion based on the target data set and the residual information, to obtain the third reuse model.

9. A model reuse apparatus, comprising:

a matching unit, configured to determine, from a learnware library, a first reuse model matching a target data set, wherein the learnware library comprises a plurality of reuse models, the first reuse model is one of the plurality of reuse models, the target data set comprises a plurality of pieces of target data, and the plurality of pieces of target data are tabular data;

a shrinkage unit, configured to perform shrinkage adjustment on the first reuse model based on the target data set, to obtain a second reuse model;

an expansion unit, configured to perform model expansion based on the target data set and the second reuse model, to obtain a third reuse model; and

an integration unit, configured to integrate the second reuse model and the third reuse model, to obtain a target reuse model corresponding to the target data set.

10. A computer program product, wherein the computer program product comprises a computer program, and when the computer program is executed by a computer or a processor, the computer or the processor is enabled to perform the method according to any one of claims 1 to 8.

11. A computer-readable storage medium, wherein the computer-readable storage medium stores a computer program, and when the computer program is executed by a computer or a processor, the method according to any one of claims 1 to 8 is implemented.

FIG. 1

FIG. 2

Determine, from a learnware library, a first reuse model matching a target data set — S301

Perform shrinkage adjustment on the first reuse model based on the target data set, to obtain a second reuse model — S302

Perform model expansion based on the target data set and the second reuse model, to obtain a third reuse model — S303

Integrate the second reuse model and the third reuse model, to obtain a target reuse model corresponding to the target data set — S304

FIG. 3

Learnware library

Target data set

Construct a target specification

Search

First reuse model

FIG. 4

Original
training data

Preset proxy
model

Original training
data + Pseudo mark

Model
specification

Preset proxy
model

Extract a model
parameter vector

Content of a model
specification
1. Model task, model input,
model output, model running
environment, and the like
that correspond to a reuse
model
2. Model parameter vector

FIG. 5

```
                        ┌─────────────────────────────┐
                        │            Start            │
                        └─────────────────────────────┘
                                      │
                                      ▼
                 ┌──────────────────────────────────────────┐
                 │  Initialize a counter N = 1, where a       │
                 │  quantity of subtrees in a first reuse     │
                 │  model is T                                │
                 └──────────────────────────────────────────┘
                                      │
                                      ▼
                              ╱─────────────╲
                             ╱    N ≤ T?      ╲──── No ────┐
                             ╲               ╱             │
                              ╲─────────────╱              │
                                    │ Yes                  │
                                    ▼                      │
                 ┌──────────────────────────────────────┐  │
                 │  Calculate a loss lᵢ that is outputted │  │
                 │  by former N subtrees                 │  │
                 └──────────────────────────────────────┘  │
                                    │                      │
                                    ▼                      │
                 ┌──────────────────────────────────────┐  │
                 │            N = N + 1                   │  │
                 └──────────────────────────────────────┘  │
                                    │                      │
                                    ▼                      │
                 ┌──────────────────────────────────────┐  │
                 │  Obtain quantities t₁, t₂, ..., and tₖ │◄─┘
                 │  of substrees corresponding to k       │
                 │  smallest losses                      │
                 └──────────────────────────────────────┘
                                    │
                                    ▼
                 ┌──────────────────────────────────────┐
                 │  Adjust the first reuse model based    │
                 │  on the quantity of subtrees          │
                 └──────────────────────────────────────┘
                                    │
                                    ▼
                 ┌──────────────────────────────────────┐
                 │  Output a second reuse model obtained  │
                 │  after adjustment                     │
                 └──────────────────────────────────────┘
```

Calculate a loss $l_i$ that is outputted by former N subtrees

Obtain quantities $t_1$, $t_2$, ..., and $t_k$ of substrees corresponding to k smallest losses

FIG. 6

First reuse model

Target reuse model

FIG. 7

| Matching unit 401 | Shrinkage unit 402 | Expansion unit 403 | Integration unit 404 |
|---|---|---|---|

Specification unit 405

Model reuse apparatus 10

FIG. 8

## INTERNATIONAL SEARCH REPORT

| International application No. |
|---|
| **PCT/CN2024/112022** |

**A.    CLASSIFICATION OF SUBJECT MATTER**

G06N3/08(2023.01)i;  G06F8/36(2018.01)n

According to International Patent Classification (IPC) or to both national classification and IPC

**B.    FIELDS SEARCHED**

Minimum documentation searched (classification system followed by classification symbols)

IPC：G06F,G06N

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 学件, 模型, 复用, 表格, 压缩, 收缩, 剪枝, 扩张, 扩展, 增量学习, learning, model, multiplex, table, compression, contraction, pruning, expansion, incremental

**C.    DOCUMENTS CONSIDERED TO BE RELEVANT**

| Category* | Citation of document, with indication, where appropriate, of the relevant passages | Relevant to claim No. |
|---|---|---|
| A | CN 116542136 A (NANJING UNIVERSITY) 04 August 2023 (2023-08-04) description, paragraphs 5-12 and 40 | 1-11 |
| A | CN 112580797 A (GUANGDONG UNIVERSITY OF TECHNOLOGY) 30 March 2021 (2021-03-30) entire document | 1-11 |
| A | CN 112149829 A (BEIJING BAIDU NETCOM SCIENCE AND TECHNOLOGY CO., LTD.) 29 December 2020 (2020-12-29) entire document | 1-11 |
| A | US 2007120712 A1 (MICROSOFT CORP.) 31 May 2007 (2007-05-31) entire document | 1-11 |
| A | US 2020097571 A1 (SALESFORCE.COM, INC.) 26 March 2020 (2020-03-26) entire document | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 October 2024** | **30 October 2024** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/112022**

| Patent document cited in search report | | | Publication date (day/month/year) | Patent family member(s) | | | Publication date (day/month/year) |
|---|---|---|---|---|---|---|---|
| CN | 116542136 | A | 04 August 2023 | None | | | |
| CN | 112580797 | A | 30 March 2021 | None | | | |
| CN | 112149829 | A | 29 December 2020 | EP | 3876166 | A2 | 08 September 2021 |
| | | | | US | 2021312293 | A1 | 07 October 2021 |
| US | 2007120712 | A1 | 31 May 2007 | US | 2007279265 | A1 | 06 December 2007 |
| US | 2020097571 | A1 | 26 March 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311075747